Europäisches Patentamt

**European Patent Office**

Office européen des brevets

(11) Numéro de publication: **0 246 132 B1**

(12) **FASCICULE DE BREVET EUROPEEN**

(45) Date de publication de fascicule du brevet:
24.07.91

(51) Int. Cl.⁵: **H04L 5/14**

(21) Numéro de dépôt: 87400971.5

(22) Date de dépôt: 28.04.87

(54) Circuit d'interface bidirectionnel présentant un accès unipolaire et un accés bipolaire pour des signaux logiques.

(30) Priorité: 14.05.86 FR 8606936

(43) Date de publication de la demande:
19.11.87 Bulletin 87/47

(45) Mention de la délivrance du brevet:
24.07.91 Bulletin 91/30

(84) Etats contractants désignés:
DE GB IT SE

(56) Documents cités:
EP-A- 0 150 457
EP-A- 0 171 555

IEEE TRANSACTIONS ON CONSUMER ELEC-
TRONICS, vol. CE-27, no. 1, février 1981, pages 102-116, IEEE, New York, US; C.H. KA-
PLINSKY: "The D2B a on e logical wire bus
for consumer applications"

ELECTRONIC ENGINEERING, vol. 56, no. 689,
mai 1984, pages 97-99, Londres, GB; E. CHOU
et al.: "A new concept in backplane communication"

(73) Titulaire: **Siemens Aktiengesellschaft**
**Postfach 22 16 34**
**W-8000 München 2(DE)**

(72) Inventeur: **Nguyen, van Thanh**
**8, rue Duguay Trouin**
**F-31400 Toulouse(FR)**
Inventeur: **Chateignon, Claude**
**362 Chemin de Tucaut**
**F-31100 Toulouse(FR)**
Inventeur: **Deschamps, Georges**
**31, Av.Ernest Renan**
**F-93100 Montreuil s/Bois(FR)**

## Description

La présente invention est relative un circuit d'interface bidirectionnel et, plus particulièrement, à un tel circuit pour échanger des signaux logiques entre un accès connecté à un fil de transmission de signaux série unipolaires et un deuxième accès connecté une paire de fils de transmission de signaux série différentiels (ou bipolaires).

Certaines applications industrielles font usage d'un système de transmission de données bien connu en téléinformatique sous le nom de "multiplexage". Par exemple, le nombre élevé et toujours croissant de capteurs et d'actionneurs installés dans un véhicule automobile, conduit à charger le véhicule de réseaux de câbles électriques denses, compliqués et encombrants, qui présentent une longueur cumulée importante. Il résulte de celle-ci une localisation plus difficile des pannes et une difficulté accrue pour assurer le passage de ces câbles à travers la structure du véhicule. Il faut en outre ajouter de nouveaux câbles pour installer dans le véhicule un matériel en option particulier. Le multiplexage, appliqué à la circulation de signaux transmis normalement par les câbles classiques, permet de réduire considérablement la longueur des câbles installés dans le véhicule.

Pour un tel véhicule, on peut concevoir ce multiplexage à l'aide d'un réseau local multipoint et multimaître comportant plusieurs boîtiers électroniques qui communiquent entre eux grâce à un support de transmission. Un mode de transmission de mise en oeuvre simple et, par conséquent, économique est la transmission en bande de base. Celle-ci, qui n'utilise pas de porteuse, ne permet à un instant donné qu'à un seul émetteur de passer son message en ligne, pour éviter conflits et pertes de données.

Un microcalculateur reçoit et traite les signaux circulant en ligne par l'intermédiaire d'une interface dite "bus-série". L'interface doit être "multi-maître", de manière que plusieurs postes locaux puissent en prendre le contrôle. Une procédure d'arbitrage permet de mettre hors service l'étage de sortie d'un maître qui transmet, par exemple, un niveau logique "haut" sur la ligne tandis qu'un autre maître transmet un niveau "bas". Ce dernier maître prend alors le contrôle de la ligne. Dans l'exemple cité, on dit qu'il y a priorité à l'état "bas".

Il existe dans le commerce de tels bus série. On connaît notamment l'interface appelée "bus I²C" commercialisé par la Société Philips. Le bus I²C est un bus série bidirectionnel comprenant une ligne de données et une ligne d'horloge. Il est aussi multimaître avec arbitrage par priorité à l'état bas. Tous les maîtres émettant leur propre signal d'horloge, il est nécessaire pendant une phase d'arbitrage d'émettre une horloge commune engendrée par synchronisation des horloges des maîtres arbitrés. Enfin il faut noter que les signaux de données ou d'horloge émis par le bus I²C sont du type unipolaire, la portée des signaux étant de quelques mètres.

A cet égard, dans l'application du multiplexage avec réseau local pour véhicule automobile envisagée cidessus, on préfère utiliser comme support de transmission une paire de fils non torsadés, pour des questions de coût de fabrication, attaquée en mode différentiel, pour des raisons d'immunités au bruit. Dans cette application, la portée de la ligne de transmission attaquée en mode différentiel doit être de plusieurs dizaines de mètres. Par conséquent, si l'on souhaite conserver les caractéristiques avantageuses d'un bus série du type I²C dans l'application envisagée, il faut disposer en outre d'une interface de ligne de transmission adaptée à une liaison unipolaire, côté bus, et différentielle côté ligne de transmission.

De tels interfaces (ou "drivers" de ligne) existent dans le commerce. Toutefois, ces interfaces ne travaillant que dans un seul sens, il faut monter "tête-bêche" deux tels interfaces pour obtenir une liaison bidirectionnelle. Encore constate-t-on qu'alors la transmission ne se fait qu'en "half-duplex", c'est-à-dire tantôt dans un sens, tantôt dans l'autre, grâce à deux fils de contrôle agissant sur l'un ou l'autre des interfaces ainsi montés. En effet, si on valide simultanément les deux interfaces, il y a bouclage des signaux, du fait du montage tête-bêche des interfaces, et blocage de ceux-ci.

La présente invention a donc pour but de réaliser un circuit d'interface bidirectionnel capable de transmettre des informations dans les deux sens, sans blocage du circuit et sans utilisation de fils de contrôle du sens de transmission.

La présente invention a aussi pour but de réaliser un tel circuit qui permet l'acquisition d'une ligne de transmission par un maître émettant un signal d'un premier état logique, en cas de conflit avec un autre maître émettant un signal d'un deuxième état logique, par une procédure d'arbitrage entre ces deux maîtres.

On atteint ces buts de l'invention avec un circuit d'interface pour échanger des signaux logiques entre un accès connecté à un fil de transmission de signaux série unipolaires et un deuxième accès connecté à une paire de fils de transmission de signaux série différentiels, qui comprend des moyens pour transmettre sur l'accès unipolaire un premier signal d'un premier état logique de niveau électrique différent de celui d'un deuxième signal du même état logique appliqué à cet accès pour transmission à l'accès différentiel, et

2

des moyens sensibles à cette différence de niveaux électriques pour empêcher que le rebouclage du premier signal à travers le circuit ne bloque celui-ci.

Ce circuit comprend en outre des moyens pour établir sur chaque accès une priorité du premier état logique sur le deuxième état, en cas de conflit de signaux, dans les deux sens de circulation de ces signaux.

Au dessin annexé, donné seulement à titre d'exemple :
- la figure 1 représente schématiquement une liaison de transmission entre un microprocesseur équipé d'un bus série et une ligne de transmission, par l'intermédiaire du circuit d'interface suivant la présente invention ; et
- la figure 2 est un schéma de câblage du circuit d'interface suivant l'invention.

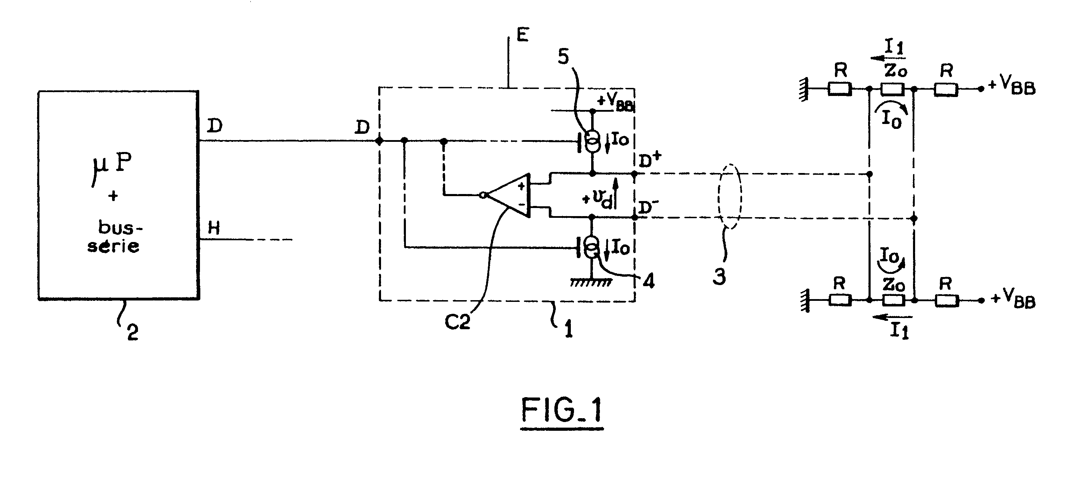

On se réfère à la figure 1, où le circuit d'interface 1 suivant l'invention est connecté par son accès unipolaire D à la ligne de transmission de données du bus série d'un microprocesseur 2. Le circuit 1 présente en outre un accès différentiel (D+,D-) connecté aux deux fils d'une ligne de transmission 3.

Dans le cas du bus-série I$^2$C précité ou de tout autre bus du même type, il existe en outre une ligne de signaux d'horloge H qui communique avec une ligne d'horloge bifilaire (H+, H-) par l'intermédiaire d'une interface tout à fait identique à celle constituée par le circuit 1. Le fonctionnement du circuit est identique dans les deux cas et on ne décrira par conséquent ce fonctionnement que dans le cas du traitement des signaux de données, à titre d'exemple. Les lignes (D,D+,D-) et (H,H+,H-) ont les mêmes caractéristiques électriques et fonctionnelles.

On revient à la figure 1 où il apparaît que le circuit d'interface 1 comprend des générateurs de courant 4 et 5. Le générateur 4 est connecté entre l'accès D- de la ligne différentielle 3 et la masse tandis que le générateur 5 est connecté entre une source de tension +$V_{BB}$ et l'accès D+ de la ligne différentielle 3. Ces deux générateurs sont commandés par les signaux venant de l'accès D du circuit 1. Le circuit comprend en outre un comparateur C2 dont la sortie est inversée alors que les entrées positives et négatives de ce comparateur sont connectées respectivement aux accès différentiels D+ et D-.

La ligne de transmission est elle-même alimentée par une source de tension +$V_{BB}$ et chargée par une impédance $Z_0$ insérée entre deux résistances R placées en série avec $Z_0$ entre la source +$V_{BB}$ et la masse (courant $I_1$).

Le circuit d'interface suivant l'invention est conçu de manière qu'un signal électrique de niveau "bas" (niveau électrique $V_{b1}$ inférieur ou égal à une valeur $V_{L1}$ prédéterminée) appliqué en D commande l'activation des générateurs de courant 4 et 5 et engendre ainsi un courant $I_0$ qui circule à travers la ligne différentielle du point D+ au point D- de telle façon qu'il apparaît une différence de potentiel ($V_{D+} - V_{D-}$) = +$V_d$.

Par contre, un signal de niveau "haut" (niveau électrique supérieur ou égal à une valeur $V_h$ prédéterminée) appliqué en D met au repos les générateurs 4 et 5 et fait apparaître aux bornes de la ligne différentielle une différence de potentiel -$V_D$. Il est clair que les signaux de niveau logique haut et bas appliqués à l'accès D se traduisent sur l'accès différentiel du circuit suivant l'invention, par des différences de potentiel négative -$V_d$ ou positive +$V_d$, respectivement, qui sont représentatives de ces niveaux logiques. Inversement, une différence de potentiel appliquée aux bornes (D+, D-) tel que $V_{D+} - V_{D-}$ = +$V_D$ met la ligne D à l'état bas (niveau électrique $V_{b2}$ fourni par le comparateur C2 à sortie inversée). De même une différence de potentiel ($V_{D+} - V_{D-}$) = -$V_d$ appliquée aux bornes D+, D- met la ligne à l'état haut (niveau électrique supérieur ou égal à $V_h$).

En outre, pour respecter la procédure de transmission du bus I$^2$C précité ou de tout autre bus équivalent, le circuit d'interface suivant l'invention doit être conçu de manière que l'état bas prime sur l'état haut.

Il faut alors éviter que l'interface ne se bloque à l'état bas quand on applique un signal de niveau bas $V_{b1}$ en D ou quand le circuit reçoit de la ligne différentielle un signal +$V_d$. Suivant une caractéristique importante du circuit d'interface de l'invention, le signal électrique $V_{b2}$ engendré par le comparateur-inverseur C2 est alors tel qu'il présente un niveau de tension, évidemment inférieur au niveau de tension $V_b$ nécessaire pour traduire un état logique bas sur la ligne D, mais supérieur au niveau de tension $V_{L1}$ en dessous duquel les générateurs de courant 4 et 5 sont mis en service. On évite ainsi le bouclage des signaux entre l'accès différentiel et l'accès unipolaire du circuit suivant l'invention, et donc le blocage de celui-ci.

Le tableau ci-dessous fait apparaître les domaines de tension offerts aux signaux $V_{b1}$ ou $V_{b2}$ émis ou reçus en D, respectivement, pour traduire les deux niveaux logiques "bas" (0) et "haut" (1).

3

Dans ce tableau les tensions $V_b$ et $V_b$ représentent les tensions minimale et maximale que l'on peut appliquer à l'accès D pour être lues par le microprocesseur comme un 1 ou comme un O, respectivement, à travers le bus série. En outre ce tableau fait apparaître une autre caractéristique du circuit d'interface suivant l'invention, caractéristique par laquelle on établit une garde d'amplitude ($VL_1$ - $VL_2$) entre le niveau 0 à la réception en D et le niveau 0 à l'émission en D. Cette garde assure la sûreté de la distinction de ces deux niveaux.

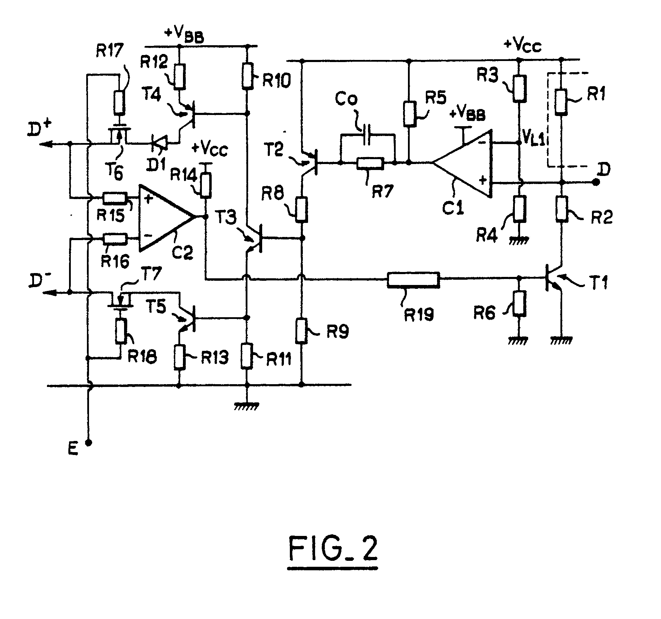

On se réfère maintenant à la figure 2 où l'on a représenté le schéma électrique du circuit d'interface suivant l'invention. D'une manière générale ce circuit comprend deux sous-circuits. Un premier sous-circuit sert à la réception de signaux émis sur l'accès différentiel (D+, D-), pour être transmis sur l'accès unipolaire D. Ce premier sous-circuit comprend essentiellement un comparateur C2 constituant un étage d'entrée différentielle et un transistor T1 constituant l'étage de sortie. Le deuxième sous-circuit est alimenté par un signal reçu sur l'entrée unipolaire D pour être transmis sur la ligne par l'accès différentiel (D+, D-). Ce deuxième sous-circuit est essentiellement constitué des transistors T4 et T5 montés en générateur de courant, des transistors T2 et T3 utilisés respectivement comme transistors de commande et de polarisation, et du comparateur C1 dont l'entrée négative est portée à un potentiel égal à $V_{L1}$.

On va maintenant décrire en plus de détail le premier sous-circuit. Les entrées positives et négatives du comparateur C2 sont connectées respectivement aux lignes D+ et D- de l'accès différentiel du circuit d'interface suivant l'invention. La sortie du comparateur C2 alimente, à travers une résistance 19, la base du transistor T1 du type NPN. Une source de tension +Vcc alimente des résistances R14, R19 et R6 montées en série pour polariser convenablement la base du transistor T1. La résistance R6 est elle-même connectée entre cette base et la masse. Le transistor T1 est monté en collecteur ouvert entre l'accès bipolaire D du circuit d'interface et la masse. Une résistance externe de tirage R1 et une résistance R2 25 sont connectées en série entre la source de tension +Vcc et le collecteur de T1 pour établir une division de tension sur l'accès D.

Le deuxième sous-circuit comprend le comparateur C1 alimenté par une source de tension +$V_{BB}$. L'entrée positive de ce comparateur est connectée à l'accès unipolaire D tandis que son entrée négative est raccordée au point milieu d'un pont de résistances R3, R4 qui servent à établir une division de tension entre la source de courant +Vcc et la masse, le point milieu de ce pont permettant d'ajuster le niveau de tension $V_{L1}$ précité.

La sortie du comparateur C1 commande la base du transistor T2 du type PNP, à travers une résistance R7 aux bornes de laquelle est connectée une capacité $C_0$. Une résistance R5 est connectée entre le point commun à la résistance R7 et à la sortie du comparateur C1 et la source de tension +Vcc. Le transistor T2 commande la base du transistor T3 de polarisation, du type NPN, par l'intermédiaire du point milieu d'un pont de résistances R8, R9 montées entre le collecteur du transistor T2 et la masse. Le transistor T3 commande le blocage et le déblocage des deux transistors T4 et T5 montés en générateurs de courant. Une résistance R10 est montée entre la source de tension +$V_{BB}$ d'alimentation de la ligne différentielle et le point commun à la base du transistor T4 et au collecteur du transistor T3. De même une résistance R11 est connectée entre la masse et le point commun à l'émetteur du transistor T3 et à la base du transistor T5. Les transistors T4 et T5 sont de type opposés, respectivement PNP et NPN. Le transistor T4 est raccordé par son émetteur à la source de tension +$V_{BB}$, par l'intermédiaire d'une résistance R12 tandis que son collecteur est raccordé à la sortie D+ de l'accès différentiel, à travers une diode D1 de protection contre les surtensions. Le transistor T5 est connecté par son collecteur la sortie D- de l'accès différentiel. L'émetteur de T5 est relié à la masse à travers une résistance R13. Un fil de commande E de déconnection des lignes différentielles D+ et D- agit sur celle-ci par l'intermédiaire de transistors à effet de champ T6 et T7, dont les grilles sont chargées par des résistances R17 et R18 respectivement. L'émission d'un signal approprié sur ce fil E permet de mettre l'accès différentiel à l'état "haute impédance".

Suivant un mode de réalisation avantageux du circuit d'interface de l'invention, les résistances R12 et R13 sont variables. On peut ainsi adapter facilement la tension différentielle $(V_{D+} - V_{D-})$ au niveau de bruit recueilli sur la ligne différentielle, en modifiant les valeurs de R12 et R13 et/ou de la tension $+V_{BB}$.

On se réfère maintenant à l'ensemble des figures 1 et 2 pour expliquer le fonctionnement du circuit d'interface suivant la présente invention.

Examinons tout d'abord le cas de l'émission d'un "1" logique par le microprocesseur. Il s'applique alors sur l'accès unipolaire D un signal $V_D$ supérieur à $V_h$. Ce signal étant supérieur au niveau de tension $V_{L1}$ appliqué sur l'entrée négative du comparateur C1, la sortie du comparateur bloque le transistor de commande T2 ce qui entraîne également le blocage des transistors T3, T4 et T5. Les générateurs de courant T4 et T5 étant alors inactifs, le courant $I_o$ émis en ligne est nul. La tension différentielle qui se propage sur la ligne est alors égale à:

$$Vd(1) = (V_{D+} - V_{D-}) = - \frac{V_{BB} \times Z_o}{Z_o + 2R} < 0$$

Ce signal de tension est reçu par tous les interfaces connectés sur la ligne différentielle, y compris le circuit d'interface émetteur suivant l'invention. Comme cette tension est négative, le transistor T1 est bloqué. La tension en D reste alors au niveau "haut" correspondant au 1 logique émis et observé par le bus série du microprocesseur.

Pour émettre un 0 logique sur la ligne différentielle, on applique en D un signal électrique de niveau inférieur au niveau $V_{L1}$. La sortie du comparateur C1 sature alors le transistor T2 qui rend le transistor T3 passant, ce dernier transistor déclenchant la génération de courant par les transitors T4 et T5. Ce courant $I_o$ peut être calculé approximativement à partir de la formule suivante :

$$I_o \simeq \left[ \frac{(V_{cc} - V_{cesat})}{R8 + R9} \times R9 - 2V_{be} \right] \times \frac{1}{R13}$$

Dans cette formule, $V_{cesat}$ correspond à la chute de tension collecteur-émetteur à saturation dans le transistor T2 et le facteur $2V_{be}$ correspond à la somme des chutes de tension émetteur-base dans les transistors T3 et T5.

Ce courant crée une différence de potentiel positive égale à :

$$Vd(0) = (V_{D+} - V_{D-}) = \frac{Z_o R I_o}{Z_o + 2R} + Vd(1)$$

Dans cette formule le facteur Vd(1) correspond à la tension observée en ligne quand Io = 0.

La tension Vd(0), positive, se retrouve sur l'entrée du comparateur C2 dont la sortie provoque la saturation du transistor T1. Suivant l'invention pour éviter le blocage du circuit d'interface, il faut alors que la tension en D soit supérieure à $V_{L1}$:

$$\frac{V_{cc} - V_{cesat}}{R1 + R2} \quad R2 + V_{cesat} > V_{L1}$$

où $V_{cesat}$ est la chute de tension collecteur-base dans le transistor T1 saturé.

On fixe arbitrairement cette valeur à une valeur VL2, plus petite que $V_b$. On tire de cette valeur VL2 le rapport des résistances R1 et R2 du pont diviseur dont le point milieu est connecté à l'accès unipolaire D :

$$\frac{R1}{R2} = \frac{V_{cc} - V_{L2}}{V_{L2} - V_{cesat}}$$

Le transistor T3 est polarisé pour travailler dans une zone linéaire (commutation rapide). Connaissant le potentiel de la base du transistor T3, on en déduit le rapport des résistances de polarisation R8 et R9 :

$$\frac{R8}{R9} = \frac{V_{cc} - V_{BT3}}{V_{BT3}}$$

Dans cette formule $V_{BT3}$ est la tension sur la base du transistor T3.

On a vu plus haut que le circuit d'interface suivant l'invention devait assurer, dans les transmissions de signaux, une priorité à l'état "bas" pour des raisons de compatibilité avec la procédure de transmission du bus série associé au microprocesseur, quand ce bus série est constitué par le bus I²C précité ou par tout autre bus équivalent. Examinons alors ce qui se passe lorsque le microprocesseur émet un 1 logique, ce qui se traduit par un niveau de tension sur l'accès D supérieur au niveau de tension $V_h$. Il s'ensuit que la tension $(V_{D+} - V_{D-})$ sur l'accès différentiel devient négative. Dans cette situation, si la ligne différentielle émet un 0 logique à destination du microprocesseur, la tension $(V_{D+} - V_{D-})$ devient positive, ce qui provoque la saturation du transistor T1 et un retour du potentiel en D à une valeur $V_{b2}$ qui est inférieure à la valeur $V_b$. Le bus série du microprocesseur voit alors un 0. Il est clair que l'état 0 prime sur l'état 1, comme l'exige la procédure de transmission adoptée.

Bien sûr, cette priorité à l'état "bas" n'est citée qu'à titre d'exemple et l'homme de métier pourrait, sans sortir du cas de la présente invention, adapté le circuit d'interface décrit à une procédure de transmission bidirectionnelle avec priorité à l'état "haut".

Les formules suivantes permettent de compléter les calculs donnant les valeurs de certains composants du circuit suivant l'invention.

Les différents éléments de la charge de ligne sont tels qu'on a :

$$Vd(0) = - Vd(1)$$

D'autre part, l'impédance vue par la ligne différentielle est identique à l'impédance caractéristique $Z_c$ de la ligne ce qui permet l'adaptation du circuit d'interface à cette ligne. On obtient la valeur de $Z_c$ par la formule suivante :

$$Z_c = \frac{2 \cdot Z_o \cdot R}{Z_o + 2R} \quad \text{où} \quad R = \frac{2V_{BB}}{I_o} \quad \text{et} \quad Z_o = \frac{2R}{2R - Z_c} \cdot Z_c$$

Dans le cas de l'adaptation du circuit d'interface suivant l'invention au bus I²C précité pour lequel :
$V_b = 1{,}5v$ $V_h = 3v$ ; $V_{b1}$ , niveau appliqué en D à l'émission = 0,45v on peut choisir :

$V_{L1} = 0{,}75v$ ; $V_{L2} = 1{,}15v$.

On trouvera ci-dessous la nomenclature des divers composants du circuit selon l'invention, donnée seulement à titre d'exemple :

$$+Vcc = +5v$$
$$+V_{BB} = +10v$$

| | |
|---|---|
| $C_1, C_2$ | : LM 219 |
| T1, T3 | : 2N2 369 |
| T2 | : 2N 5771 |
| T4 | : BC 327 |
| T5 | : BC 337 |
| T6, T7 | : MOSFET MPF 6660 |
| R1 | : 1 k$\Omega$ |

| R3,R15,R16,R17,R18 | : 10 kΩ |
|---|---|
| R2 | : 300 Ω |
| R4 | : 1,8kΩ |
| R5,R8 | : 620 Ω |
| R6 | : 330 Ω |
| R7 | : 3,3 kΩ |
| R9 | : 3,7 kΩ |
| R10,R11 | : 2 kΩ |
| R12,R13 | : 120 Ω |
| R14 | : 620 Ω |
| R19 | : 360 Ω |
| D | : 1N 4148 |

Le circuit d'interface suivant l'invention, pour échanger dans les deux sens des signaux logiques unipolaires d'un côté et différentiels de l'autre, permet d'éviter l'inconvénient des "drivers" de ligne montés "tête-bêche" mentionnés plus haut, qui ne peuvent éviter un blocage sans commande par fils de contrôle. Il permet en outre d'établir une priorité de passage des signaux d'un certain état logique, conforme aux exigences des procédures de transmission de signaux entre une ligne différentielle et une unité de traitement telle qu'un microprocesseur, associé à un bus série bifilaire à ligne de donnée et ligne d'horloge.

Bien entendu, l'invention n'est pas limitée à l'application décrite ci-dessus, relative au multiplexage de la transmission de signaux dans un véhicule. Bien au contraire, elle trouve application partout où il importe d'assurer une transmission bidirectionnelle de signaux entre une ligne de transmission de signaux unipolaires et une ligne de transmission de signaux bipolaires.

En outre, il est clair que le circuit d'interface suivant l'invention se prête à une réalisation en circuit intégré.

## Revendications

1. Circuit d'interface pour échanger des signaux logiques entre un accès connecté à un fil de transmission de signaux série unipolaires et un deuxième accès connecté à une paire de fils de transmission de signaux série différentiels, caractérisé en ce qu'il comprend des moyens pour transmettre sur l'accès unipolaire un premier signal représentatif d'un premier état logique, dont le niveau électrique est différent de celui d'un deuxième signal du même état logique appliqué sur cet accès pour transmission à l'accès différentiel, et des moyens sensibles à cette différence de niveaux électriques pour empêcher que le rebouclage du premier signal à travers le circuit ne bloque celui-ci.

2. Circuit conforme à la revendication 1, caractérisé en ce qu'il comprend des moyens pour établir sur chaque accès une priorité du premier état logique sur le deuxième état, en cas de conflit de signaux, dans les deux sens de circulation de ces signaux.

3. Circuit conforme à l'une quelconque des revendications 1 et 2, caractérisé en ce qu'il comprend un premier sous-circuit (C2,T1) pour transmettre des signaux de l'accès différentiel vers l'accès unipolaire et un deuxième sous-circuit (T4,T5,T3,T2,C1) pour transmettre des signaux de l'accès unipolaire vers l'accès différentiel, ces deux sous-circuits étant couplés au niveau des accès.

4. Circuit conforme à la revendication 3, pour délivrer un signal différentiel positif ou négatif sur l'accès différentiel lorsqu'on applique à l'accès unipolaire un signal d'un premier niveau logique "bas" ou d'un deuxième niveau logique "haut", respectivement, caractérisé en ce que le deuxième sous-circuit comprend un comparateur C1 à seuil connecté à l'accès unipolaire pour commander, par l'intermédiaire d'un transistor de commande T2 et d'un transistor de polarisation T3, des transistors (T4,T5) montés

8

en générateurs de courant, pour leur faire débiter un courant sur l'accès différentiel, qui crée un signal différentiel positif sous la commande d'un signal logique bas arrivant sur l'accès unipolaire, le seuil $V_{L1}$ du comparateur C1 correspondant au potentiel limite que l'on peut appliquer sur cet accès unipolaire pour émettre sur l'accès différentiel un signal positif, correspondant à un niveau bas, un dépassement de ce seuil provoquant le blocage des générateurs de courant et l'émission d'un signal négatif sur l'accès différentiel, correspondant à un niveau haut.

5. Circuit conforme l'une quelconque des revendications 3 et 4, caractérisé en ce que le premier sous-circuit comprend un comparateur C2 dont les entrées sont connectées aux fils de l'accès différentiel et dont la sortie commande la base d'un transistor T1 monté en collecteur ouvert sur l'accès unipolaire, un pont constitué par une résistance externe R1 et une résistance R2 fixant le niveau de tension du signal bas reçu par l'accès unipolaire.

6. Circuit conforme à l'une quelconque des revendications précédentes, caractérisé en ce qu'il comprend une entrée E de commande de déconnection de l'accès différentiel, agissant sur deux transistors à effet de champ T6,T7 montés de manière à mettre cet accès à l'état haute impédance.

7. Circuit conforme à l'une quelconque des revendications précédentes, caractérisé en ce qu'il comprend une diode $D_1$ montée sur le collecteur du transistor générateur de courant T4, pour protéger l'accès différentiel d'une surtension positive.

8. Circuit conforme à l'une quelconque des revendications précédentes, caractérisé en ce qu'il comprend des moyens de réglage de la tension positive ou négative sur l'accès différentiel, constitué par une source de tension réglable $+V_{BB}$ et de résistances variables R12 et R13 montées sur les émetteurs des transistors générateurs de courant T4 et T5, respectivement.

9. Application du circuit d'interface conforme à l'une quelconque des revendications précédentes, à la transmission multiplexée de signaux électriques dans un véhicule.

## Claims

1. Interface circuit for exchanging logic signals between a port connected to a wire for the transmission of unipolar serial signals and a second port connected to a pair of wires for the transmission of differential serial signals, characterized in that it comprises means of transmitting in the unipolar port a first signal of a first logic state of electrical level different from that of a second signal of the same logic state applied to that port for transmission on the differential port, and means sensitive to this difference in electrical levels in order to prevent the looping of the first signal through the circuit from blocking the circuit.

2. Circuit according to Claim 1, characterized in that it includes means of establishing on each port a priority of the first logic state over the second state, in the case of a conflict of signals, in both directions of flow of these signals.

3. Circuit according to any of Claims 1 and 2, characterized in that it includes a first sub-circuit (C2,T1) for transmitting signals from said differential port to said unipolar port and a second sub-circuit (T4,T5,T3,T2,C1) for transmitting signals from said unipolar port to said differential port, these two sub-circuits being coupled at the point of said ports.

4. Circuit according to Claim 3, for delivering a positive or negative differential signal to said differential port when a signal of a first "low" logic level or of a second "high" logic level respectively is applied to said unipolar port, characterized in that said second sub-circuit includes a threshold comparator C1 connected to said unipolar port in order to control, by means of a control transistor T2 and a biasing transistor T3, transistors (T4,T5) connected as current generators, in order to make them supply a current to said differential port, which creates a positive differential signal under the control of a low logic signal arriving at said unipolar port, the level $V_{L1}$ of said comparator C1 corresponding to the limit potential that can be applied to this unipolar port in order to transmit on said differential port a positive signal, corresponding with a low level, an overshoot of this threshold causing the blockage of said current generators and the transmission of a negative signal on said differential port, corresponding with

9

a high level.

5. Circuit according to any of Claims 3 and 4, characterized in that the first sub-circuit includes a comparator C2 whose inputs are connected to the wires of said differential port and whose output controls the base of a transistor T1 connected in open-collector configuration to said unipolar port, a bridge formed by an external resistor R1 and a resistor R2 fixing the voltage level of the low signal received by said unipolar port.

6. Circuit according to any of the previous Claims, characterized in that it includes a control input E for disconnecting said differential port, acting on two field effect transistors T6,T7 connected in such a way as to put this port in the high impedance state.

7. Circuit according to any of the previous Claims, characterized in that it includes a diode $D_1$ connected to the collector of the current generator transistor T4, in order to protect the differential port from a positive overvoltage.

8. Circuit according to any of the previous Claims, characterized in that it includes means of adjusting the positive or negative voltage on said differential port, formed by an adjustable voltage source $+V_{BB}$ and variable resistors R12 and R13 connected to the emitters of the current generator transistors T4 and T5 respectively.

9. Application of the interface circuit according to any of the previous Claims to the multiplexed transmission of electrical signals in a vehicle.

## Patentansprüche

1. Schnittstellenschaltung zum Austausch von logischen Signalen zwischen einem mit einer Übertragungsleitung für eine unipolare Signalserie verbundenen Zugang und einem mit zwei Übertragungsleitungen für eine differentielle Signalserie verbundenen zweiten Zugang, dadurch gekennzeichnet, daß Mittel zum Übertragen eines ersten Signals entsprechend einem ersten logischen Zustand über den unipolaren Zugang vorgesehen sind, wobei das elektrische Niveau des Signals unterschiedlich gegenüber einem zweiten Signal mit gleichem logischem Zustand ist, das an diesen Zugang zur Übertragung auf dem differentiellen Zugang gelangt, und daß Mittel zum Erfassen des Unterschiedes des elektrischen Niveaus vorgesehen sind, um zu verhindern, daß das Einschleifen des ersten Signals in die Schaltung diese sperrt.

2. Schaltung nach Anspruch 1, dadurch gekennzeichnet, daß Mittel vorgesehen sind, um an jedem Zugang eine Priorität des logischen ersten Zustandes über den zweiten Zustand in beiden Signalflußrichtungen im Falle eines Signalkonflikts herzustellen.

3. Schaltung nach Anspruch 1 oder 2, dadurch gekennzeichnet, daß eine erste Unterschaltung (C2,T1) zum Übertragen von Signalen am differentiellen Zugang zum unipolaren Zugang und eine zweite Unterschaltung (T4,T5,T3,T2,C1) zum Übertragen von Signalen am unipolaren Zugang zum differentiellen Zugang vorgesehen sind, wobei die beiden Unterschaltungen auf dem Niveau der beiden Zugänge verbunden sind.

4. Schaltung nach Anspruch 3 zur Abgabe eines positiven oder negativen differentiellen Signals am differentiellen Zugang nach dem Empfang eines Signals mit einem ersten logischen "niedrigen" Signalpegel bzw. einem zweiten logischen "hohen" Signalpegel an dem unipolaren Zugang, dadurch gekennzeichnet, daß die zweite Unterschaltung einen Vergleicher (C1) aufweist, der an den unipolaren Zugang angeschlossen ist, um über die Zwischenschaltung eines Steuertransistors (T2) und eines Polarisationstransistors (T3) Transistoren (T4,T5) eines Stromgenerators anzusteuern, damit diese einen Strom am differentiellen Zugang liefern, der auf Befehl eines logischen niedrigen Signals am unipolaren Zugang ein positives differentielles Signal erzeugt, daß der Schwellenwert ($V_{L1}$) des Vergleichers (C1) einem Grenzwert entspricht, der am unipolaren Zugang anliegt, um am differentiellen Zugang ein positives Signal zu erhalten, das einem niedrigen Niveau entspricht und daß beim Überschreiten des Schwellenwertes die Stromgeneratoren gesperrt werden und ein negatives Signal am differentiellen Zugang entsprechend einem hohen Niveau abgegeben wird.

EP 0 246 132 B1

5. Schaltung nach einem der Ansprüche 3 oder 4, dadurch gekennzeichnet, daß die erste Unterschaltung einen Vergleicher (C2) aufweist, dessen Eingänge mit den Leitungen des differentiellen Zugangs verbunden sind und dessen Ausgang die Basis eines Transistors (T1) ansteuert, dessen Kollektor an den unipolaren Zugang mittels einer Brückenschaltung angeschlossen ist, die aus einem äußeren Widerstand (R1) und einem Widerstand (R2) besteht, um die Spannung des am unipolaren Zugang anstehenden niedrigen Signals anzupassen.

6. Schaltung nach einem der vorhergehenden Ansprüche, dadurch gekennzeichnet, daß ein Eingang (E) zum Unterbrechen des differentiellen Zugangs vorgesehen ist, wobei der Eingang auf zwei Feldeffekttransistoren (T6,T7) wirkt, die derart geschaltet sind, daß der Zugang eine hohe Impedanz erhält.

7. Schaltung nach einem der vorhergehenden Ansprüche, dadurch gekennzeichnet, daß eine an den Kollektor des Stromerzeugertransistors (T4) geschaltete Diode (D1) vorgesehen ist, um den differentiellen Zugang gegen eine positive Überspannung zu schützen.

8. Schaltung nach einem der vorhergehenden Ansprüche, dadurch gekennzeichnet, daß Mittel zur Regelung der positiven oder negativen Spannung am differentiellen Zugang vorgesehen sind, die aus einer regelbaren Spannungsquelle ($+V_{BB}$) und aus veränderlichen Widerständen (R12) und (R13) bestehen, die an die Emitter der Stromerzeugungstransistoren (T4) und (T5) angeschlossen sind.

9. Anwendung der Schnittstellenschaltung nach einem der vorhergehenden Ansprüche auf die multiplexe Übertragung von elektrischen Signalen in einem Fahrzeug.

FIG_1

EP 0 246 132 B1

FIG_2